# EUROPÄISCHE PATENTANMELDUNG

(11) **EP 4 303 431 A1**
(43) Veröffentlichungstag der Anmeldung: **10.01.2024**
(21) Anmeldenummer: 22182818.9
(22) Anmeldetag: 04.07.2022
(51) Int. Cl.: F03D 1/06, F03D 13/10

(54) **MONTAGEADAPTER ZUR MONTAGE VON ROTORBLÄTTERN AN EINER WINDENERGIEANLAGE UND VERFAHREN ZUR MONTAGE VON ROTORBLÄTTERN AN EINER WINDENERGIEANLAGE**

(71) Anmelder: Wobben Properties GmbH, 26607 Aurich (DE)
(72) Erfinder: Fleßner, Günter, 26605 Aurich (DE); Siebelts, Stephan, 26427 Holtgast (DE); Ressel, Dirk, 26605 Aurich (DE)
(74) Vertreter: Eisenführ Speiser

(57) **Zusammenfassung**

Es wird ein Montageadapter (300) zur Montage von Rotorblättern einer Windenergieanlage (100) vorgesehen. Der Montageadapter (300) weist eine erste Flanscheinheit (310) mit einer ersten Flanschfläche (311) auf, welche dazu geeignet ist, an einem Rotorblattanschluss (121 -123) einer Windenergieanlage (100) befestigt zu werden. Der Montageadapter (300) weist eine zweite Flanscheinheit (320) mit einer zweiten Flanschfläche (321) auf, welche dazu geeignet ist, ein Rotorblatt (200) der Windenergieanlage (100) daran zu befestigen. Die erste und zweite Flanscheinheit (310, 320) können um eine Schwenkachse (S) zueinander verschwenkbar sein. Ein Winkel, welcher durch die erste und zweite Flanschfläche (311, 321) aufgespannt wird, ist veränderbar, um mindestens eine erste und zweite Betriebsposition des Montageadapters (300) mit unterschiedlichen Winkeln zu gewährleisten.

## Beschreibung

Die vorliegende Erfindung betrifft einen Montageadapter zur Montage von Rotorblättern an einer Windenergieanlage und ein Verfahren zur Montage von Rotorblättern an einer Windenergieanlage.

Zur Montage einer Windenergieanlage wird ein Kran mit einer entsprechenden Hakenhöhe benötigt, um die Gondel, den Generator sowie die Rotorblätter montieren zu können. Mit größer werdender Nabenhöhe muss auch die Hakenhöhe (d. h. die maximale Höhe des Hakens) vergrößert werden. Dies ist jedoch nicht beliebig möglich, da Kräne mit einer entsprechenden Hakenhöhe nicht beliebig verfügbar sind.

WO 2020/187959 A1 beschreibt ein Verfahren zur Montage von Rotorblättern einer Windenergieanlage. Hierbei wird versucht, durch intelligentes Drehen der Rotornabe eine Montage der Rotorblätter zu vereinfachen und insbesondere die hierfür benötigte Kranhöhe zu reduzieren.

Es ist eine Aufgabe der vorliegenden Erfindung, ein Verfahren zur Montage von Rotorblättern an einer Windenergieanlage vorzusehen, welches einen vereinfachten Aufbau bei größeren Nabenhöhen ermöglicht. Es ist ferner eine Aufgabe der vorliegenden Erfindung, eine reduzierte Hakenhöhe eines Krans bei der Montage von Rotorblättern einer Windenergieanlage zu ermöglichen.

Diese Aufgabe wird durch einen Montageadapter nach Anspruch 1 und ein Verfahren zur Montage von Rotorblättern einer Windenergieanlage nach Anspruch 5 gelöst.

Gemäß einem Aspekt der vorliegenden Erfindung wird ein Montageadapter zur Montage eines Rotorblatts verwendet, welcher als ein Gelenkadapter ausgestaltet sein kann. Der Adapter wird während der Montage an einem der drei Rotorblattanschlüsse an der Nabe vorgesehen. Der Adapter weist eine erste und zweite Flanschfläche auf. Die erste Flanschfläche kann an einem Rotorblattanschluss montiert sein. An der zweiten Flanschfläche wird das Rotorblatt montiert. Die erste und zweite Flanschfläche sind über eine Schwenkachse miteinander verbunden. Somit kann der Winkel zwischen der ersten und zweiten Flanschfläche variiert werden. Insbesondere kann dabei ein Adapter vorgesehen werden, welcher mindestens zwei Betriebspositionen mit unterschiedlichen Winkeln zwischen der ersten und zweiten Flanschfläche aufweist.

Gemäß einem Aspekt der vorliegenden Erfindung weist der Adapter zwei Betriebspositionen mit zwei unterschiedlichen Winkeln zwischen der ersten und zweiten Flanschfläche auf.

Gemäß einem weiteren Aspekt der vorliegenden Erfindung weist der Adapter mindestens drei Betriebspositionen auf, wobei die erste und zweite Betriebsposition jeweils einen ersten und zweiten Winkel zwischen der ersten und zweiten Flanschfläche aufweist. In der dritten Betriebsposition können die erste und zweite Flanschfläche parallel zueinander angeordnet sein.

Gemäß einem Aspekt der vorliegenden Erfindung weist ein Adapter eine erste und zweite Einheit bzw. Flanscheinheit auf, welche verschwenkbar miteinander verbunden sind. Die erste und die zweite Flanscheinheit weist jeweils eine Flanschfläche sowie zwei parallele Seitenwände auf, welche jeweils mit der Flanschfläche verbunden sind. In den Seitenwänden können Löcher oder Bohrungen vorgesehen sein.

Gemäß einem Aspekt der Erfindung weist der Montageadapter einen Montagearm auf, der sich über die erste und zweite Flanschfläche hinaus erstreckt.

Gemäß einem ersten Aspekt kann die erste Flanscheinheit eine Flanschfläche sowie zwei Seitenwände aufweisen, wobei die Seitenwände jeweils zwei Bohrungen mit unterschiedlichem Abstand zur Flanschfläche aufweisen können. Die zweite Flanscheinheit kann ebenfalls eine Flanschfläche sowie zwei Seitenwände aufweisen. Die Seitenwände der zweiten Flanscheinheit können jeweils mindestens drei Öffnungen oder Bohrungen aufweisen. Hierbei kann an einem ersten Ende der Seitenwände eine Bohrung und an einem zweiten Ende der Seitenwände zwei Bohrungen mit unterschiedlichem Abstand zur Flanschfläche vorgesehen sein. Die eine Bohrung an einem Ende der Seitenwände der zweiten Flanscheinheit und eine erste Bohrung in den Seitenwänden der ersten Flanscheinheit können beispielsweise mittels eines Bolzens miteinander verbunden werden, so dass der Bolzen als Gelenk fungiert und die erste und zweite Flanschfläche verschwenkt werden kann, so dass der Winkel zwischen der ersten und zweiten Flanschfläche veränderbar ist. Zur Arretierung der ersten und zweiten Flanscheinheit kann ein Bolzen jeweils in dem zweiten Loch der Seitenwand der ersten Flanscheinheit sowie in einem der beiden freien Löcher in den Seitenwänden der zweiten Flanscheinheit vorgesehen sein. Durch Auswahl der zweiten Löcher kann der Winkel zwischen der ersten und zweiten Flanschfläche eingestellt werden. Vorzugsweise weist der Adapter mindestens zwei Betriebspositionen auf, welche durch die beiden Löcher oder Bohrungen am zweiten Ende der Seitenwände der zweiten Flanschfläche realisiert werden.

Gemäß einem weiteren Aspekt der vorliegenden Erfindung kann die erste oder zweite Flanscheinheit eine Flanschfläche sowie zwei Seitenwände aufweisen, wobei die Seitenwände vier Löcher aufweisen. Hierbei können zwei Löcher am ersten Ende mit unterschiedlichem Abstand zur Flanschfläche vorgesehen sein. Am zweiten Ende der Seitenwand können jeweils zwei weitere Löcher vorgesehen sein, welche ebenfalls mit unterschiedlichem Abstand zur Flanschfläche vorgesehen sein können. Die Seitenwände können somit jeweils vier Öffnungen bzw. Bohrungen aufweisen. Die Seitenwände der anderen Flanscheinheit können zwei Löcher aufweisen, jeweils am ersten und zweiten Ende der jeweiligen Seitenwand. Mit einem derartigen Adapter können mindestens drei verschiedene Betriebspositionen erreicht werden. Hierbei können zwei verschiedene Winkel zwischen der ersten und zweiten Flanschfläche realisiert werden. In einem dritten Arbeitspunkt kann ein Adapter mit parallelen Flanschflächen vorgesehen sein.

Gemäß einem Aspekt der Erfindung kann der Adapter zwei verschwenkbare (zueinander verschwenkbare) Flanscheinheiten jeweils mit einer Flanschfläche aufweisen. Der Winkel zwischen den beiden Flanschflächen ist verstellbar und kann mindestens zwei Winkel aufweisen.

Die Erfindung betrifft ferner ein Verfahren zur Montage von Rotorblättern an einer Windenergieanlage. Die Windenergieanlage weist eine Nabe mit drei Rotorblattanschlüssen zur Aufnahme von Rotorblättern und eine Turmlängsachse auf. Ein oben beschriebener Montageadapter wird an einem der Rotorblattanschlüsse montiert. Die Nabe wird gedreht, so dass einer der drei Rotorblattanschlüsse sich in einer 3 Uhr-Position oder in einem Winkel von 90° bezogen auf die Turmlängsachse befindet. Ein erstes Rotorblatt wird an diesem Rotorblattanschluss angehoben und dort montiert. Der Montageadapter befindet sich hierbei in einer ersten Betriebsposition mit einem ersten Winkel zwischen seiner ersten und zweiten Flanschfläche. Ein zweites Rotorblatt wird an einem zweiten der drei Rotorblattanschlüsse montiert. Ein drittes Rotorblatt wird an der zweiten Flanschfläche des Montageadapters montiert. Der Winkel zwischen der ersten und zweiten Flanschfläche wird geändert, so dass sich der Montageadapter in einer zweiten Betriebsposition befindet. Das dritte Rotorblatt wird demontiert und der Montageadapter wird montiert. Anschließend wird das dritte Rotorblatt an dem dritten Rotorblattanschluss montiert.

Gemäß einem Aspekt der Erfindung erfolgt ein Drehen der Nabe so, dass sich die zweite Flanschfläche des Montageadapters parallel zur Turmlängsachse befindet, bevor das dritte Rotorblatt montiert werden kann. Anschließend wird das dritte Rotorblatt an der zweiten Flanschfläche montiert. Die Nabe wird im Uhrzeigersinn gedreht und die Betriebsposition des Montageadapters wird geändert. Die Nabe wird im Uhrzeigersinn um 30° gedreht. Das dritte Rotorblatt wird demontiert. Der Montageadapter wird montiert und das dritte Rotorblatt wird an dem dritten Rotorblattanschluss montiert.

Gemäß einem weiteren Aspekt der vorliegenden Erfindung wird das zweite Rotorblatt an der zweiten Flanschfläche des Montageadapters montiert, welche parallel zur Turmlängsachse vorgesehen ist. Die Betriebsposition des Montageadapters wird geändert und die Nabe wird im Uhrzeigersinn gedreht. Die Betriebsposition des Montageadapters wird so geändert, dass die erste und zweite Flanschfläche im Wesentlichen parallel zueinander angeordnet sind und das dritte Rotorblatt wird an der zweiten Flanschfläche befestigt und im Wesentlichen horizontal angeordnet. Das Rotorblatt wird demontiert, der Montageadapter wird montiert und das Rotorblatt wird an dem dritten Rotorblattanschluss montiert.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine Windenergieanlage gemäß einem Aspekt der Erfindung,
- Fig. 2A und 2B: zeigen jeweils eine Ansicht eines Montageadapters zur Montage von Rotorblättern einer Windenergieanlage gemäß einem ersten Ausführungsbeispiel,
- Fig. 3A bis 3M: zeigen verschiedene Schritte zur Montage von Rotorblättern einer Windenergieanlage gemäß dem ersten Ausführungsbeispiel,
- Fig. 4A bis 4C: zeigen jeweils eine Ansicht eines Montageadapters gemäß einem zweiten Ausführungsbeispiel, und
- Fig. 5A bis 5K: zeigen jeweils einen Schritt bei der Montage von Rotorblättern einer Windenergieanlage gemäß einem zweiten Ausführungsbeispiel.

Gemäß der Erfindung kann eine Turmlängsachse 102a 0° oder eine 12 Uhr-Position darstellen. Die Positionen der Rotorblattanschlüsse lassen sich so einem Winkel (0° bis 360°) oder einer "Uhrzeit" (12 Uhr bis 11 Uhr) zuordnen.

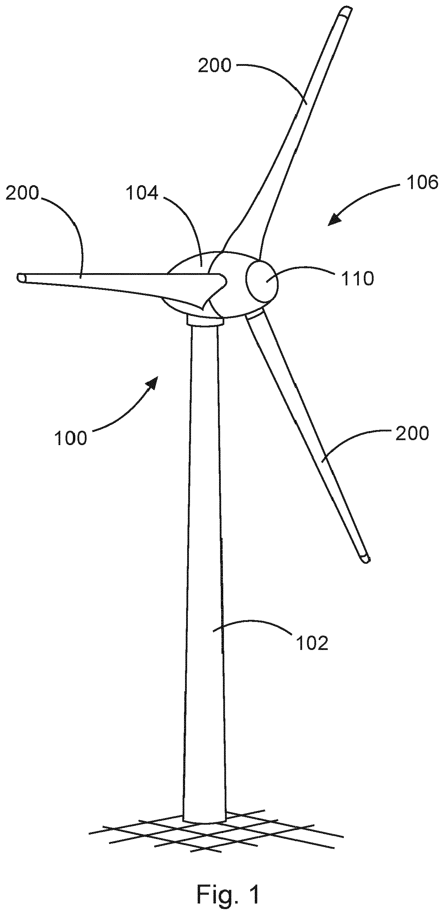

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

Gemäß der Erfindung können Positionen des aerodynamischen Rotors 106 sowie der Rotorblattanschlüsse 121, 122, 123 anhand eines Uhr-Zifferblattes oder anhand von Winkelangaben beschrieben werden. 0° entspricht dabei einer 12-Uhr-Position und kann beispielsweise durch eine Turmlängsachse bestimmt werden. 90° entspricht einer 3-Uhr-Position, 180° entspricht einer 6-Uhr-Position und 270° entspricht einer 9-Uhr-Position.

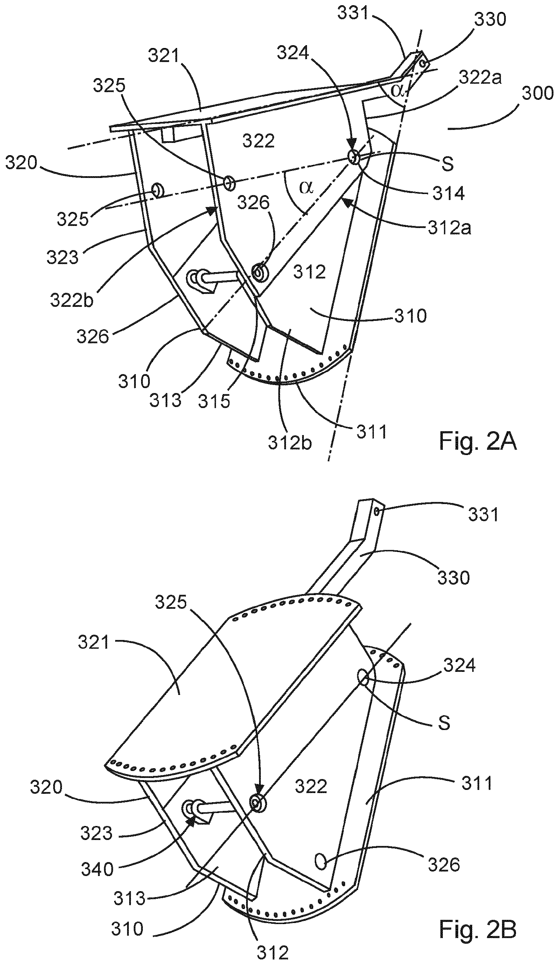

Fig. 2A und 2B zeigen jeweils eine Ansicht eines Montageadapters zur Montage von Rotorblättern einer Windenergieanlage gemäß einem ersten Ausführungsbeispiel. Ein Adapter bzw. ein Montageadapter 300 gemäß dem ersten Ausführungsbeispiel weist zwei Flanscheinheiten 310, 320 auf, welche zueinander verschwenkbar ausgestaltet sind, d. h. der Winkel α zwischen der ersten und zweiten Flanscheinheit 310, 320 kann verändert werden.

Die erste Flanscheinheit 310 weist eine erste Flanschfläche 311 sowie zwei erste Seitenwände 312, 313 auf. Die ersten beiden Seitenwände 312, 313 weisen jeweils ein erstes und zweites Ende 312a, 312b, 313a, 313b auf. An dem ersten Ende 312a, 313a ist jeweils ein erstes Loch oder Bohrung 314 und an dem zweiten Ende 312b ist jeweils ein zweites Loch oder Bohrung 315 vorgesehen. Das erste Loch 314 weist einen ersten Abstand 314a zur ersten Flanschfläche und das zweite Loch 315 weist einen zweiten Abstand 315a zur ersten Flanschfläche 311 auf. Der erste Abstand 314a ist dabei wesentlich kleiner als der zweite Abstand 315a.

Die zweite Flanscheinheit 320 weist eine zweite Flanschfläche 321 sowie zwei zweite Seitenwände 322, 323 auf, welche mit der zweiten Flanschfläche 321 verbunden sind. Die zweiten Seitenwände weisen jeweils ein erstes und zweites Ende 322a, 322b; 323a, 323b auf und weisen ferner mindestens drei Löcher oder Bohrungen 324, 325, 326 auf. Das erste Loch 324 der ersten Seitenwand 322 der zweiten Flanscheinheit 320 ist an einem ersten Ende 322a und das zweite und dritte Loch 325, 326 sind an dem zweiten Ende 322b der zweiten Seitenwände 322, 323 vorgesehen. Das zweite und dritte Loch 325, 326 weisen unterschiedliche Abstände 325a, 326a zur zweiten Flanschfläche 321 auf.

Gemäß einem Aspekt der vorliegenden Erfindung nehmen die ersten Löcher 324 der zweiten Seitenwände 322, 323 und das erste Loch 314 der ersten Seitenwand der ersten Flanscheinheit 310 beispielsweise einen Bolzen 341 oder dergleichen auf, so dass diese Stelle als Gelenk der Adaptereinheit 300 fungiert und eine Schwenkachse S ausbildet.

Optional kann an der ersten oder zweiten Flanscheinheit 310, 320 und insbesondere an der ersten oder zweiten Flanschfläche 311, 321 ein (Montage)Arm 330 mit einem Aufhängepunkt 331 vorgesehen sein. Der Aufhängepunkt 331 dient dazu, den Adapter 300 mit einem Kranhaken transportieren (anheben oder absenken) zu können.

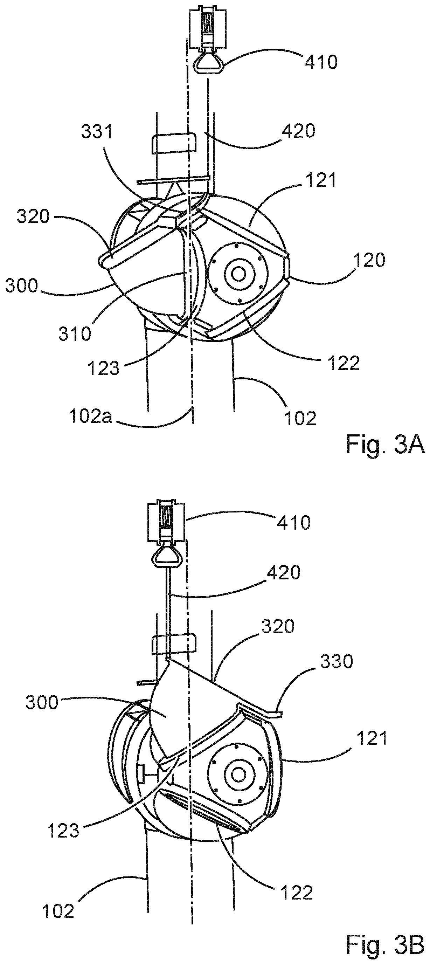

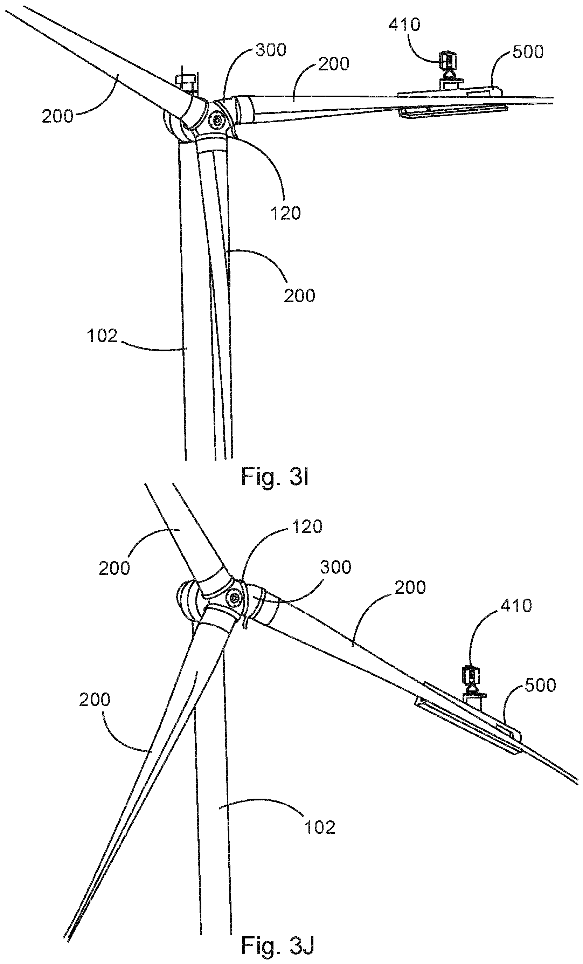

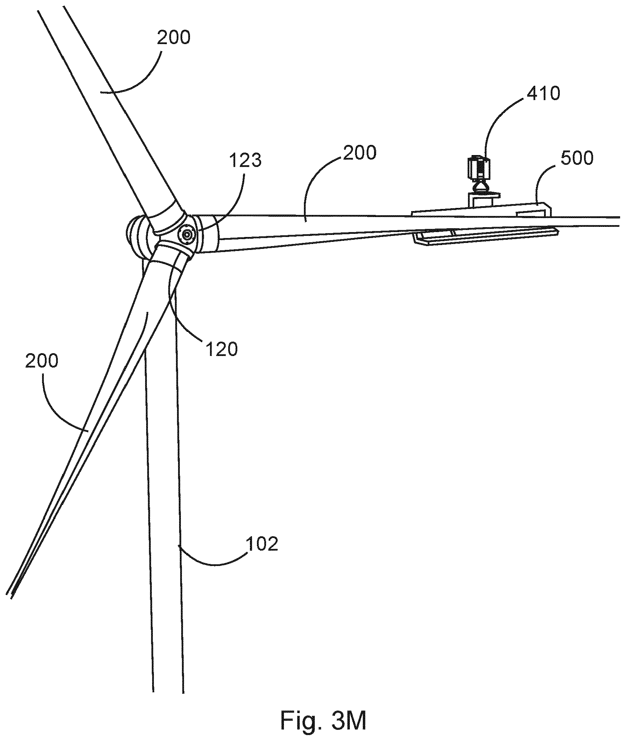

Fig. 3A bis 3M zeigen verschiedene Schritte zur Montage von Rotorblättern einer Windenergieanlage gemäß dem ersten Ausführungsbeispiel. Im ersten Schritt (s. Fig. 3A) wird eine Nabe 120 der Windenergieanlage mit drei Rotorblattanschlüssen 121, 122, 123 mittels eines Kranhakens 410 und einer Schlinge oder eines Seils 420 montiert. Hierbei kann ein Montageadapter 300 gemäß der Erfindung bereits an einem Rotorblattanschluss 121 - 123 montiert sein. Die Nabe kann beispielsweise mittels des Montagearms 330 und des Kranhakens 410 montiert werden. Anschließend (s. Fig. 3B) kann die Nabe um 60° im Uhrzeigersinn gedreht werden, so dass der erste Rotorblattanschluss 121 sich in einer 3 Uhr-Position oder in einem Winkel von 90° bezogen auf eine Turmlängsachse befindet.

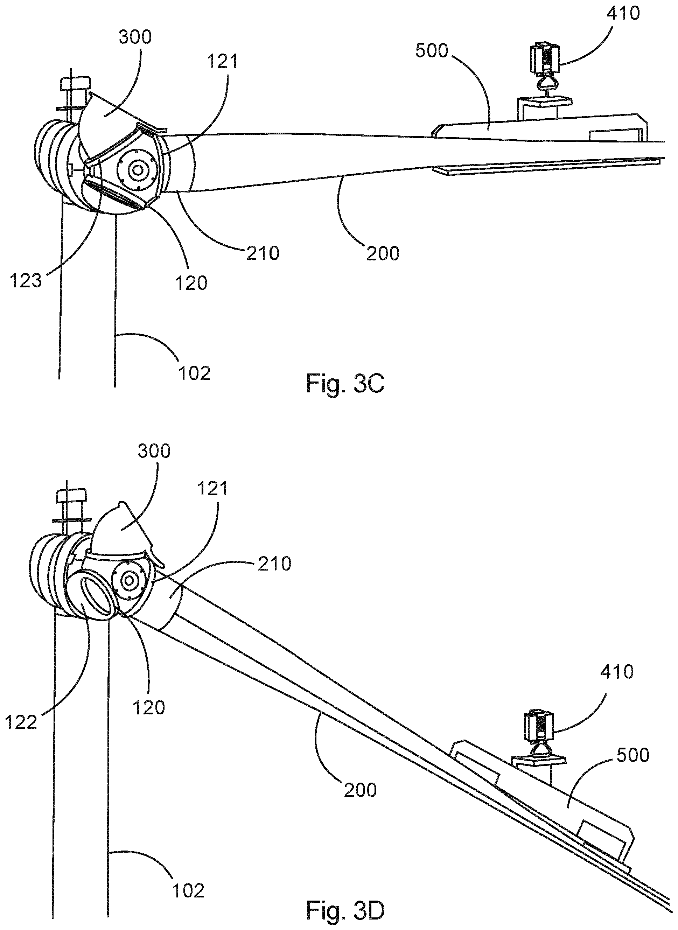

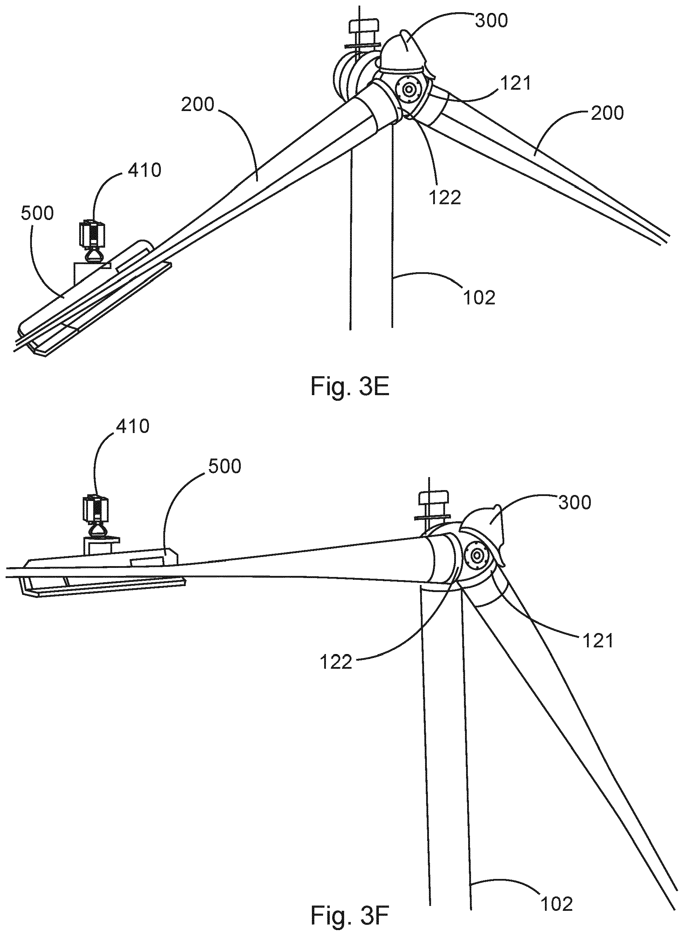

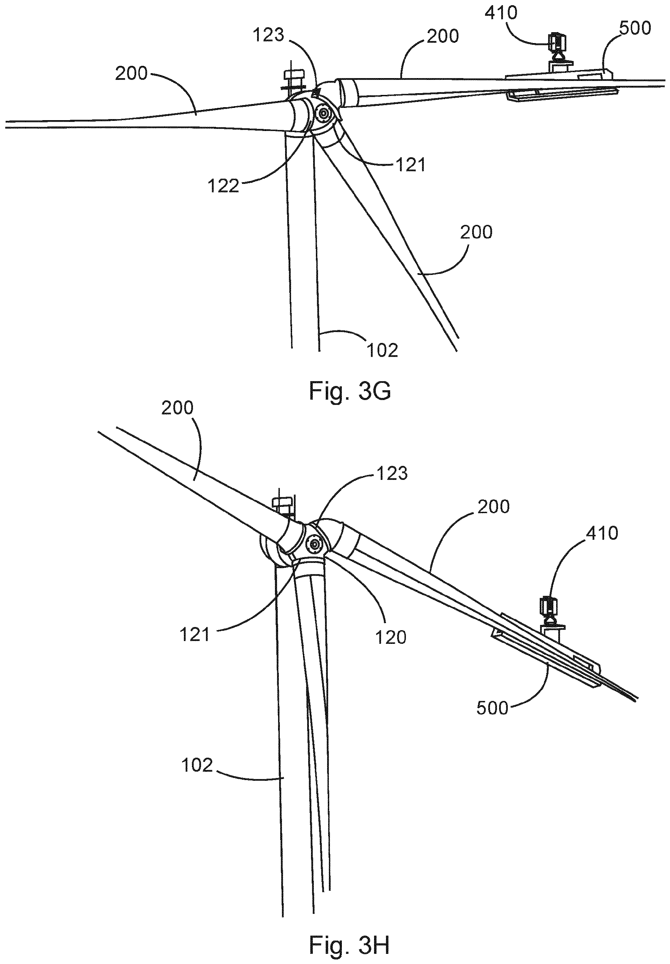

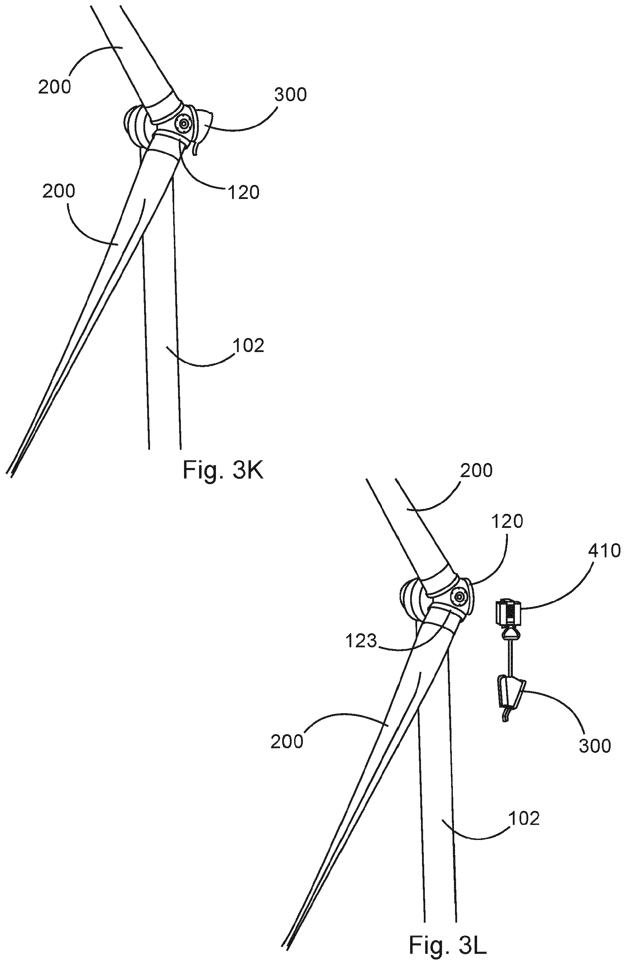

Anschließend wird (s. Fig. 3C) ein erstes Blatt 200 beispielsweise mittels einer Blatttraverse 500 an dem ersten Rotorblattanschluss 121 montiert. Hierbei wird das Rotorblatt 200 im Wesentlichen horizontal montiert. Im nächsten Schritt (s. Fig. 3D) wird das erste Rotorblatt 200 um 30° im Uhrzeigersinn nach unten bewegt. Anschließend (s. Fig. 3E) wird ein zweites Rotorblatt 200 an dem zweiten Rotorblattanschluss 122 montiert. Der zweite Rotorblattanschluss 122 befindet sich hierbei in einer 8 Uhr-Position. Die Montage des zweiten Rotorblattes kann mittels einer Hebetraverse 500 erfolgen und optional in einem Winkel von 30° bezogen auf die Horizontale montiert werden. Im nächsten Schritt (s. Fig. 3F) wird das zweite Rotorblatt 200 um 30° nach oben gezogen, so dass sich der zweite Rotorblattanschluss 122 in einer 9 Uhr-Position (270°) befindet. Das Rotorblatt 200 ist damit im Wesentlichen horizontal. Im nächsten Schritt (Fig. 3G) wird das dritte Rotorblatt 200 an dem Montageadapter 300 montiert. Das Rotorblatt 200 befindet sich während der Montage im Wesentlichen in der Waagerechten. Im nächsten Schritt (Fig. 3H) wird das dritte Rotorblatt um 30° im Uhrzeigersinn nach unten verdreht. Im nächsten Schritt (Fig. 31) wird der Adapter 300 in eine andere Betriebsposition gebracht. Dies kann beispielsweise dadurch erfolgen, dass die jeweiligen Bolzen geöffnet werden, so dass der Winkel zwischen der ersten und zweiten Flanschfläche geändert wird. Das dritte Blatt 200 wird dann um 30° gegen den Uhrzeigersinn hochgezogen. Im nächsten Schritt (Fig. 3J) werden die Bolzen am Adapter 300 geschlossen und der Adapter 300 befindet sich dann in einer weiteren Betriebsposition. Anschließend kann das dritte Rotorblatt wieder um 30° im Uhrzeigersinn gedreht werden. Im nächsten Schritt (Fig. 3K) wird das dritte Rotorblatt mittels der Rotorblatttraverse nach unten befördert und der Adapter wird mittels eines Kranhakens demontiert (s. Fig. 3L). Anschließend kann das Rotorblatt wieder mittels der Rotorblatttraverse an dem dritten Rotorblattanschluss montiert werden, welcher sich in der 3 Uhr-Position bzw. bei 90° befindet.

Gemäß einem Aspekt der vorliegenden Erfindung erfolgt eine Montage der Rotorblätter 200 einer Windenergieanlage mit Hilfe eines Montageadapters 300, der an einem Rotorblattanschluss 121 - 123 montiert wird. Der Montageadapter 300 weist eine erste und zweite Flanschfläche 311, 321 auf, welche in einem Winkel zueinander angeordnet sind. Optional kann der Winkel zwischen der ersten und zweiten Flanschfläche 311, 321 verstellt werden. Optional weist der Montageadapter mindestens zwei Betriebspositionen mit unterschiedlichen Winkeln zwischen der ersten und zweiten Flanschfläche auf. Optional weist der Montageadapter einen Montagearm 330 mit einer Bohrung 331 auf. Mittels des Montagearms kann der Montageadapter mittels des Kranhakens 410 angehoben oder abgesenkt werden.

Gemäß einem Aspekt der vorliegenden Erfindung kann der Montageadapter 300 an einem Rotorblattanschluss 121 - 123 der Nabe der Windenergieanlage 100 montiert werden, bevor die Nabe montiert wird. Insbesondere kann die Nabe hierbei mittels des Montagearms 330 angehoben und an oder in der Gondel montiert werden.

Gemäß einem Aspekt der vorliegenden Erfindung ist der Montagearm 330 an einem ersten Ende des Montageadapters 300 montiert. An einem zweiten Ende des Montageadapters kann im Bereich der ersten und/oder zweiten Flanschfläche mindestens eine weitere Bohrung vorgesehen sein. Mittels dieser Bohrung und eines Seils 420 kann der Montageadapter demontiert werden. Alternativ dazu kann die zweite Bohrung auch dazu verwendet werden, die Nabe zu drehen. Hierbei kann wie in Fig. 3B dargestellt ein Seil 420 an einem Kranhaken 410 befestig werden, so dass die Nabe 120 um beispielsweise 60° im Uhrzeigersinn mittels des Kranhakens 410, gedreht wird, so dass der erste Rotorblattanschluss 121 sich in einer 3-Uhr-Position bzw. 90°-Position befindet und das erste Rotorblatt 200 horizontal montiert werden kann.

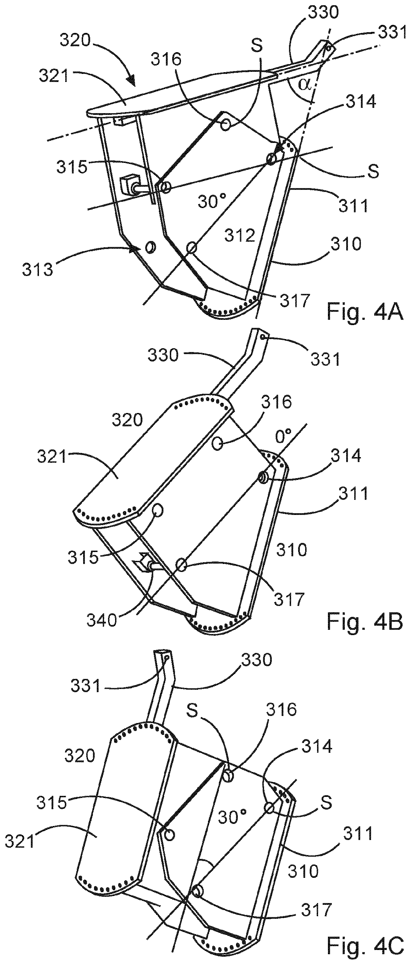

Fig. 4A bis 4C zeigen jeweils eine Ansicht eines Montageadapters 300 gemäß einem zweiten Ausführungsbeispiel. Der Montageadapter 300 gemäß dem zweiten Ausführungsbeispiel kann beispielsweise als ein Doppelgelenkadapter ausgestaltet sein. Wie im ersten Ausführungsbeispiel weist der Montageadapter 300 eine erste und zweite Flanscheinheit 310, 320 auf. Die erste Flanscheinheit 310 weist eine Flanschfläche 311 sowie zwei Seitenwände 312, 313 auf, welche mit der Flanschfläche 310 verbunden sind. Die zweite Flanscheinheit 320 weist eine zweite Flanschfläche 321 sowie zwei Seitenwände 322, 323 auf, welche mit der Flanschfläche 311 gekoppelt sind. Optional können die Seitenwände 312, 313 der ersten Flanscheinheit 310 sowie die Seitenwände 322, 323 der zweiten Flanscheinheit 320 parallel zueinander ausgestaltet sein. Optional kann der Abstand zwischen den Seitenflächen 312, 313 der zweiten Flanscheinheit 320 kleiner sein als der Abstand zwischen den Seitenflächen der ersten Flanscheinheit 310.

Die Seitenflächen 312, 313 der ersten Flanscheinheit 310 können vier Löcher oder Bohrungen 314, 315, 316, 317 aufweisen. Hierbei können zwei Löcher oder Bohrungen 314, 316 am ersten Ende sowie zwei Löcher 315, 317 am zweiten Ende der Seitenwände vorgesehen sein. Die Löcher 314, 316 können zur Aufnahme eines Gelenkbolzens dienen, um ein Gelenk des Montageadapters 300 auszubilden, so dass die erste und zweite Flanscheinheit 310, 320 zueinander um eine Schwenkachse S verschwenkt werden können, so dass der Winkel α zwischen der ersten Flanschfläche 311 und der zweiten Flanschfläche 321 verstellt werden kann. Die beiden Löcher 315, 317 können zur Aufnahme eines Sperrbolzens oder eines Arretierbolzens 340 verwendet werden. Der Sperrbolzen oder Arretierbolzen 340 kann also wahlweise in der Öffnung oder Bohrung 315 oder in der Öffnung oder Bohrung 317 aufgenommen werden. Hierdurch können zwei verschiedene Betriebspositionen (mit unterschiedlichem Winkel α zwischen der ersten und zweiten Flanschfläche 311, 321) realisiert werden.

In Fig. 4A ist der Arretierbolzen 340 in der Öffnung 315 arretiert. In Fig. 4B ist der Arretierbolzen 340 in der Öffnung 317 arretiert. Somit ist ein anderer Winkel α zwischen der ersten und zweiten Flanschfläche 311, 321 vorhanden als in Fig. 4A. Der Unterschied zwischen dem Montageadapter von Fig. 4A zu dem Montageadapter von Fig. 4B besteht lediglich darin, dass der Sperrbolzen 340 in einem anderen Loch am zweiten Ende der Seitenwände arretiert ist.

In Fig. 4C ist der Montageadapter im ausgeklappten Zustand dargestellt. Hierbei ist die zweite Flanscheinheit 320 bzw. die Seitenwände der zweiten Flanscheinheit über entsprechende Bolzen mit den Löchern oder Bohrungen 317, 316 der Seitenwände der ersten Flanscheinheit 310 gekoppelt. Damit können die erste und zweite Flanschfläche 311, 321 parallel zueinander ausgestaltet sein.

Gemäß dem zweiten Ausführungsbeispiel ist ein Montagearm 330 an der zweiten Flanscheinheit 320 befestigt. Der Montagearm 330 kann abgeknickt ausgestaltet sein und kann eine Bohrung 331 am freien Ende aufweisen. Mittels dieser Bohrung 331 kann der Montageadapter mittels eines Seils und eines Kranhakens angehoben oder abgesenkt werden.

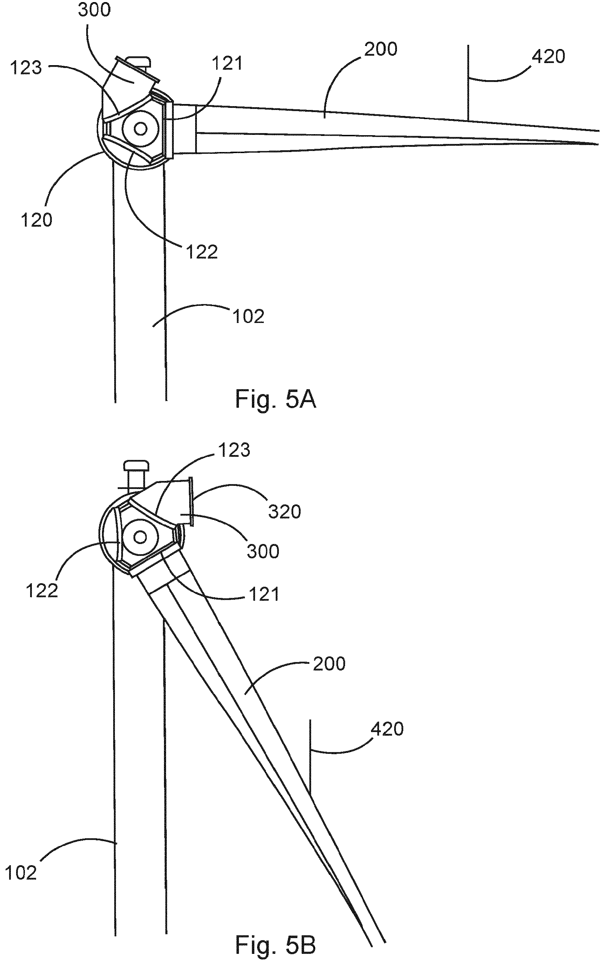

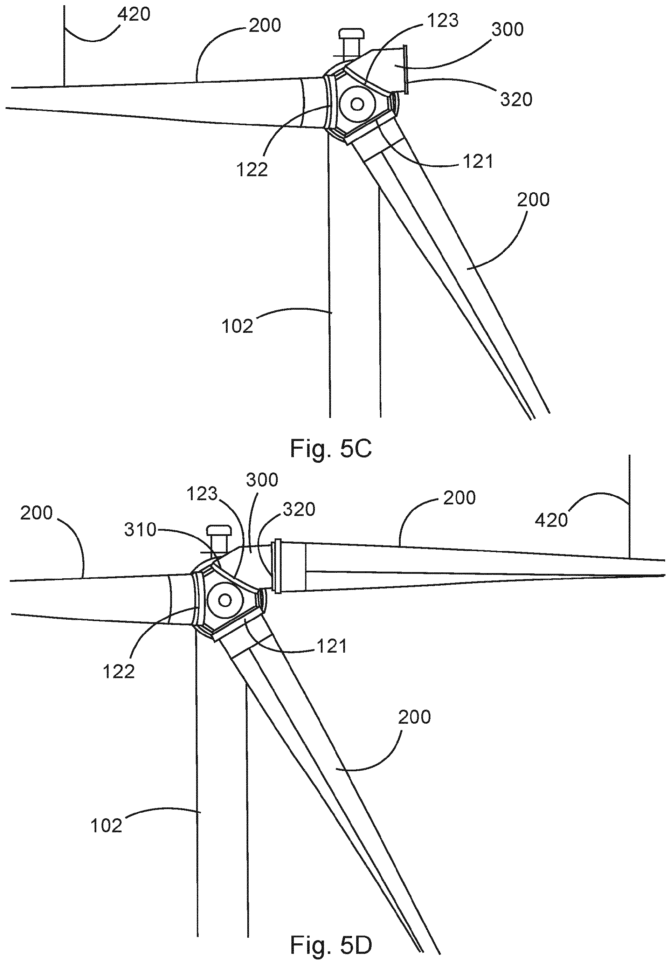

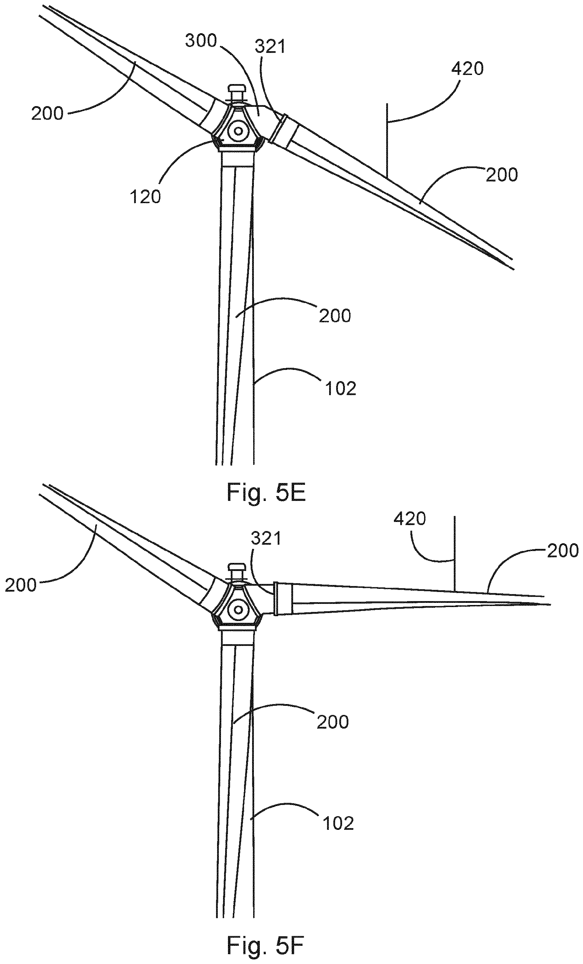

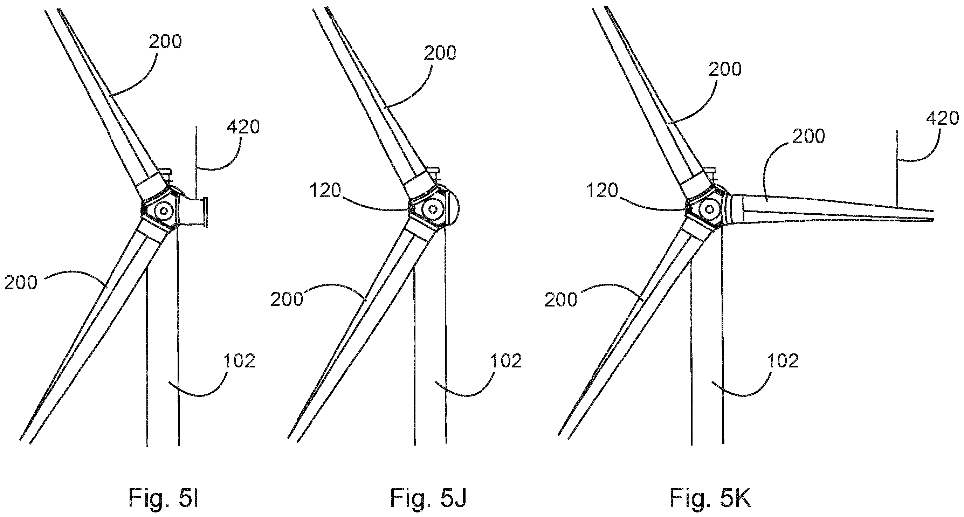

Fig. 5A bis 5K zeigen jeweils einen Schritt bei der Montage von Rotorblättern einer Windenergieanlage gemäß einem zweiten Ausführungsbeispiel. In Fig. 5A ist ein erstes Rotorblatt 200 bereits an einem ersten Rotorblattanschluss 121 montiert. An dem dritten Rotorblattanschluss 123 ist der Montageadapter 300 vorgesehen. Wie in den Fig. 3A und 3B dargestellt kann auch gemäß dem zweiten Ausführungsbeispiel optional der Montageadapter 300 an einem der Rotorblattanschlüsse 121 - 123 einer Nabe 120 montiert werden, bevor die Nabe zusammen mit dem Montageadapter 300 mittels eines Kranhakens nach oben gezogen wird. Optional kann die Nabe mittels des an einem Rotorblattanschluss montierten Montageadapters 300 (wie in Fig. 3A dargestellt) nach oben gezogen werden. Anschließend kann wie in Fig. 3B dargestellt die Nabe mittels des Montageadapters 300 an dem dritten Rotorblattanschluss 123, mittels eines Seils 420 sowie eines Kranhakens 410 um 60° im Uhrzeigersinn gedreht werden, so dass der erste Rotorblattanschluss 121 sich in der 3-Uhr-Position bzw. der 90°-Position befindet. In Fig. 5A ist das Rotorblatt 200 bereits an dem ersten Rotorblattanschluss 121 montiert. Das Rotorblatt 200 wird vorzugsweise horizontal nach oben gezogen und an dem ersten Rotorblattanschluss 121 montiert.

Optional kann die Montage der Rotorblätter gemäß dem zweiten Ausführungsbeispiel ohne eine Hebetraverse 500 (wie im ersten Ausführungsbeispiel dargestellt) montiert werden.

Wie in Fig. 5B gezeigt, wird das Rotorblatt 200 um 60° nach unten abgelassen, so dass sich die Nabe 120 um 60° im Uhrzeigersinn dreht. Somit befindet sich der zweite Rotorblattanschluss 122 in einer 9-Uhr-Position bzw. in einer 270° Position. Wie in Fig. 5C gezeigt, kann das zweite Rotorblatt 200 waagerecht nach oben gezogen werden und an dem zweiten Rotorblattanschluss 122 montiert werden. Der Montageadapter 300 ist an dem dritten Rotorblattanschluss 123 befestigt. Insbesondere kann die erste Flanschfläche 310 an dem zweiten Rotorblattanschluss 122 befestigt sein. Die zweite Flanschfläche 320 kann hierbei beispielsweise im Wesentlichen senkrecht bezogen auf das zweite Rotorblatt 200 an dem zweiten Rotorblattanschluss 122 vorgesehen sein, so dass das dritte Rotorblatt an die zweite Flanschfläche 320 waagerecht montiert werden kann. Somit kann sowohl das zweite Rotorblatt 200 als auch das dritte Rotorblatt 200 waagerecht montiert werden, ohne dass es dabei zu einer Drehung der Rotornabe 120 kommen muss.

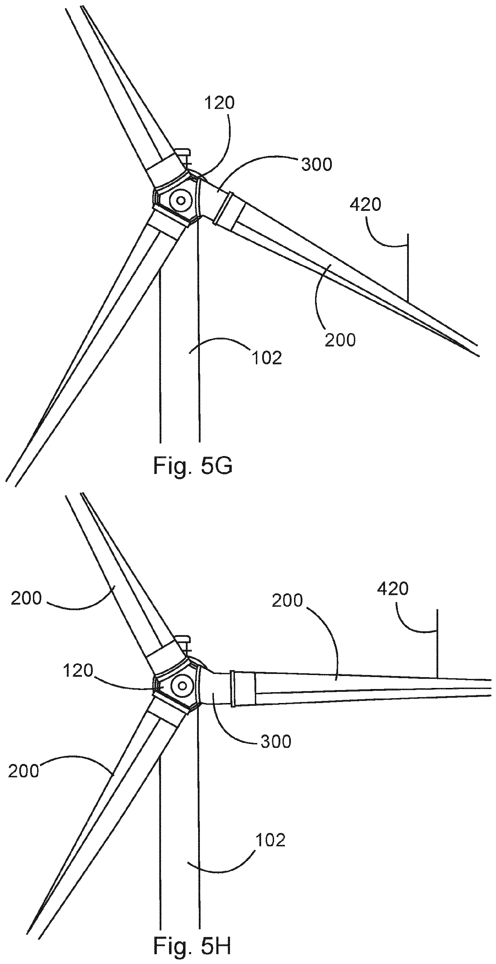

Wie in Fig. 5E gezeigt, wird die Nabe 120 durch Ablassen des dritten Rotorblattes 200 um 30° im Uhrzeigersinn gedreht. Die Rotornabe 120 wird dann arretiert (verbolzt) und das dritte Rotorblatt wird um 30° angehoben. Hierbei wird die Arretierung zwischen der ersten und zweiten Flanscheinheit 310, 320 aufgehoben, so dass sich der Winkel zwischen der ersten und zweiten Flanscheinheit 310, 320 verändert, so dass die zweite Flanschfläche 321 im Wesentlichen senkrecht zur Turmlängsachse ausgestaltet ist. Damit ist dann auch das dritte Rotorblatt 300 im Wesentlichen waagerecht ausgerichtet. Anschließend wird - wie in Fig. 5G gezeigt - das dritte Rotorblatt 200 um 30° nach unten abgelassen und die Rotornabe 120 wird verbolzt. Wie in Fig. 5H gezeigt, wird das dritte Rotorblatt dann wieder um 30° angehoben und der Rotor wird verbolzt. Anschließend wird das dritte Rotorblatt 200 von dem Montageadapter 300 entfernt. Optional kann das Rotorblatt nach unten befördert und dort abgelegt werden. Danach wird der Montageadapter mittels eines Kranhakens abgelassen und das Rotorblatt kann wieder im Wesentlichen waagerecht angehoben und an dem dritten Rotorblattanschluss 123 montiert werden. Somit sind dann alle drei Rotorblätter an der Rotornabe montiert.

Gemäß einem Aspekt der vorliegenden Erfindung kann somit der Kran, welcher zur Montage der Gondel verwendet wird, auch zur Montage der Rotorblätter verwendet werden. Damit reicht es aus, wenn ein Kran auf der Baustelle vorhanden ist.

Gemäß der Erfindung werden die Rotorblätter entweder horizontal oder bei -30° montiert.

Gemäß einem Aspekt der vorliegenden Erfindung weist der Montageadapter eine erste und zweite Flanscheinheit auf, welche zueinander verschwenkbar bzw. drehbar ausgestaltet sind. Hierbei kann der Winkel zwischen der ersten und zweiten Flanscheinheit beispielsweise 30° oder 60° betragen. Alternativ dazu kann der Montageadapter eine Betriebsposition aufweisen, bei welcher die erste und zweite Flanscheinheit parallel zueinander ausgestaltet sind.

Gemäß einem Aspekt der vorliegenden Erfindung kann das oben beschriebene Verfahren zur Montage von Rotorblättern einer Windenergieanlage insbesondere bei einer Turmhöhe von > 160 m angewandt werden.

Gemäß einem Aspekt der vorliegenden Erfindung wird ein Montageadapter zur Montage von Windenergieanlagen-Rotorblättern vorgesehen. Der Montageadapter weist eine erste und zweite Flanscheinheit 310, 320 auf, welche zueinander verschwenkbar ausgestaltet sind. Hierbei kann die erste und zweite Flanscheinheit 310, 320 mindestens zwei Betriebspositionen einnehmen, wobei jede Betriebsposition einen anderen Winkel zwischen der ersten und zweiten Flanscheinheit bewirkt bzw. aufweist.

Mittels einer ersten Flanschfläche kann die Montageeinheit an einem Rotorblattanschluss einer Windenergieanlage montiert werden. Ein zweiter Rotorblattanschluss kann zur Montage einer Rotorblattwurzel und somit eines Rotorblattes verwendet werden. Der Montageadapter ist somit zwischen dem Rotorblatt und einem Rotorblattanschluss (während der Montage der Rotorblätter) vorgesehen. Insbesondere wird bei der Montage der drei Rotorblätter der Montageadapter an einem der drei Rotorblattanschlüsse befestigt und nach Montage der Rotorblätter wieder entfernt.

### Bezugszeichenliste

- 100: Windenergieanlage
- 102: Turm
- 102a: Turmlängsachse
- 104: Gondel
- 106: Rotor
- 110: Spinner
- 120: Nabe
- 121: Rotorblattanschluss
- 122: Rotorblattanschluss
- 123: Rotorblattanschluss
- 200: Rotorblätter
- 300: Montageadapter
- 310: Flanscheinheiten
- 311: Flanschfläche
- 312: Seitenwände
- 312a: erstes Ende
- 312b: zweites Ende
- 313: Seitenwände
- 313a: erstes Ende
- 313b: zweites Ende
- 314: Bohrung
- 314a: erster Abstand
- 315: Bohrung
- 315a: zweiter Abstand
- 316: Bohrungen
- 317: Bohrungen
- 320: Flanscheinheiten
- 321: Flanschfläche
- 322: Seitenwände
- 322a: erstes Ende
- 322b: zweites Ende
- 323: Seitenwände
- 324: Bohrungen
- 325: Bohrungen
- 325a: Abstand
- 326: Bohrungen
- 326a: Abstand
- 330: (Montage)Arm
- 331: Aufhängepunkt
- 341: Bolzen
- 340: Arretierbolzen
- 410: Kranhaken
- 420: Seil
- 500: Blatttraverse
- S: Schwenkachse

## Patentansprüche

1. Montageadapter (300) zur Montage von Rotorblättern einer Windenergieanlage (100), mit
einer ersten Flanscheinheit (310) mit einer ersten Flanschfläche (311), welche dazu geeignet ist, an einem Rotorblattanschluss (121 - 123) einer Windenergieanlage (100) befestigt zu werden,
einer zweiten Flanscheinheit (320) mit einer zweiten Flanschfläche (321), welche dazu geeignet ist, ein Rotorblatt (200) der Windenergieanlage (100) daran zu befestigen,
wobei die erste und zweite Flanscheinheit (310, 320) um eine Schwenkachse (S) zueinander verschwenkbar sind,
wobei ein Winkel (a), welcher durch die erste und zweite Flanschfläche (311, 321) aufgespannt wird, veränderbar ist, um mindestens eine erste und zweite Betriebsposition des Montageadapters (300) mit unterschiedlichen Winkeln (a) zu gewährleisten.

2. Montageadapter (300) nach Anspruch 1, wobei
die erste Flanscheinheit (310) zwei erste Seitenwände (312, 313) aufweist, welche jeweils mit der ersten Flanschfläche (311) verbunden sind,
die zweite Flanscheinheit (320) zwei zweite Seitenwände (322, 323) aufweist, welche jeweils mit der zweiten Flanschfläche (321) verbunden sind,
wobei die ersten und zweiten Seitenwände (312, 313; 322, 323) Öffnungen aufweisen, in welche ein Bolzen (340) arretiert werden kann, um eine der mindestens zwei Betriebspositionen mit unterschiedlichen Winkeln (a) einzustellen.

3. Montageadapter nach Anspruch 1 oder 2, ferner mit
einem Montagearm (330), welcher mit der ersten oder zweiten Flanschfläche (311, 321) verbunden ist, wobei der Montagearm (330) sich an einer Seite über die erste oder zweite Flanschfläche (311, 321) erstreckt.

4. Montageadapter nach einem der Ansprüche 2 oder 3, wobei
die ersten oder zweiten Seitenwände (312, 313; 322, 323) Öffnungen mit unterschiedlichem Abstand zu der ersten oder zweiten Flanschfläche (311, 321) aufweisen, um unterschiedliche Betriebspositionen des Montageadapters (300) einstellen zu können.

5. Verfahren zur Montage von Rotorblättern (200) an einer Windenergieanlage (100), wobei die Windenergieanlage (100) eine Nabe (120) mit einem ersten, zweiten und dritten Rotorblattanschluss (121 - 123) zur Aufnahme von Rotorblättern (200) und eine Turmlängsachse (102a) aufweist, mit den Schritten:
Montieren eines Montageadapters (300) nach einem der Ansprüche 1 bis 4 an einem dritten Rotorblattanschluss (123),
Drehen der Nabe (120), so dass der erste Rotorblattanschluss (121) sich in einer 3-Uhr-Position oder in einem Winkel von 90° bezogen auf die Turmlängsachse (102a) befindet,
Anheben und Montieren eines ersten Rotorblattes (200) an dem ersten Rotorblattanschluss (121),
wobei sich der Montageadapter (300) in einer ersten Betriebsposition mit einem ersten Winkel (a) zwischen der ersten und zweiten Flanschfläche (311, 321) befindet,
Montieren eines zweiten Rotorblattes (200) an dem zweiten Rotorblattanschluss (121 - 123),
Montieren eines dritten Rotorblattes (200) an der zweiten Flanschfläche (322) des Montageadapters (300),
Ändern des Winkels (a) zwischen der ersten und zweiten Flanschfläche (311, 321), so dass sich der Montageadapter (300) in einer zweiten Betriebsposition befindet,
Demontieren des dritten Rotorblattes (200) von der zweiten Flanschfläche (322),
Demontieren des Montageadapters (300) von dem dritten Rotorblattanschluss (123), und
Montieren des dritten Rotorblattes (200) an dem dritten Rotorblattanschluss (123).

6. Verfahren nach Anspruch 5, ferner mit den Schritten:
Drehen der Nabe (120), so dass sich die zweite Flanschfläche (322) parallel zur Turmlängsachse (102a) befindet, bevor das dritte Rotorblatt (200) montiert wird,
Montieren des dritten Rotorblattes (200) an der zweiten Flanschfläche (322),
Drehen der Nabe (120) im Uhrzeigersinn,
Ändern der Betriebsposition des Montageadapters (300),
Drehen der Nabe (120) im Uhrzeigersinn um 30°,
Demontage des dritten Rotorblattes (200),
Demontage des Montageadapters (300), und
Montage des dritten Rotorblattes (200) an dem dritten Rotorblattanschluss (123).

7. Verfahren nach Anspruch 5, ferner mit den Schritten:
Montieren des zweiten Rotorblattes (200) an einer zweiten Flanschfläche (321) des Montageadapters (300), welche parallel zur Turmlängsachse (102a) vorgesehen ist,
Ändern der Betriebsposition des Montageadapters (300),
Drehen der Nabe (120) im Uhrzeigersinn,
Ändern der Betriebsposition des Montageadapters (300), so dass die erste und zweite Flanschfläche (311, 321) im Wesentlichen parallel angeordnet sind und das dritte Rotorblatt (200) an der zweiten Flanschfläche (321) befestigt ist und im Wesentlichen horizontal angeordnet ist,
Demontage des dritten Rotorblattes (200) von der zweiten Flanschfläche (321),
Demontage des Montageadapters (300), und
Montage des dritten Rotorblattes (200) an dem dritten Rotorblattanschluss (123).
